# DEMANDE DE BREVET EUROPEEN

(11) **EP 1 195 593 A1**
(43) Date de publication de la demande: **10.04.2002**
(21) Numéro de dépôt: 00870226.8
(22) Date de dépôt: 05.10.2000
(51) Int. Cl.: G01M 15/00

(54) **Installation d'essais pour la réalisation de tests de moteurs d'avion**

(71) Demandeur: Techspace Aero S.A., 4041 Herstal (BE)
(72) Inventeur: Malbrouck, Robert Lambert Gilbert, 4432 Alleur (BE); Rousseau, Stéphane Luc Emile, 4458 Fexhe-Slins (BE)
(74) Mandataire: Van Malderen, Joelle

(57) **Abrégé**

La présente invention se rapporte à une installation d'essais (1) destinée à la réalisation de tests sur des moteurs (100), de préférence des moteurs d'avions tels que turboréacteurs ou turbopropulseurs qui sont disposés dans un banc d'essais (7) et qui sont en interaction avec des actionneurs (9) et des capteurs (11) constituant respectivement les sorties et les entrées d'un organe de commande et de contrôle (5) qui est lui-même associé à des moyens permettant l'établissement, le contrôle et la visualisation du point de fonctionnement dudit banc d'essais et dudit moteur en temps réel, caractérisée en ce que lesdits moyens pour l'établissement, le contrôle et la visualisation comprennent au moins une interface opérateur (3), de préférence à écran tactile, munie d'une pluralité de boutons-poussoirs (31) programmables, chacun desdits boutons-poussoirs (31) étant programmé de sorte que l'action de presser ledit bouton-poussoir (31) déclenche l'exécution d'une action ou séquence d'actions prédéfinie sur ledit moteur en fonctionnement et/ou ledit banc d'essais.

La présente invention se rapporte également au procédé de programmation de l'ensemble interface opérateur / organe de contrôle et au procédé de configuration de l'organe de contrôle.

## Description

### Objet de l'invention

La présente invention se rapporte à une installation comprenant un banc d'essais pour la réalisation de tests de moteurs d'avion.

Plus particulièrement, la présente invention se rapporte à l'organe de commande et de contrôle des différents éléments nécessaires à la mise en condition d'un banc d'essais pour la réalisation de tests de moteurs d'avion. Ces moteurs d'avion peuvent être des turboréacteurs, des turbopropulseurs, etc.

La présente invention se rapporte également au procédé de programmation et de configuration de l'interface opérateur à écran tactile de l'organe de commande et de contrôle présent sur le banc d'essais.

### Etat de la technique

Les moteurs tels que les turboréacteurs et les turbopropulseurs doivent être soumis à une série de tests sur banc d'essais afin que l'on puisse vérifier leurs caractéristiques et leur comportement du point de vue tant mécanique qu'aérodynamique, tels que essais et contrôle de rodage, de vérification de la poussée, de consommation, d'absence de vibrations, de contrôle des pompes à carburant, du circuit d'air de démarrage, de la mise sous tension des bougies, de l'état des portes, des volets, des circuits de servitude et de sécurité, etc. Dans ce but, ces moteurs sont disposés et maintenus dans les bancs d'essais à l'aide d'une structure support.

Ces bancs d'essais sont commandés par des organes de commande et de contrôle qui permettent, sur base d'informations transmises par des capteurs et en agissant sur des actionneurs, d'effectuer la série prescrite d'essais.

L'organe de commande, appelé E.C.M. (pour *Engine Control Module*), est donc le dispositif d'interface et de dialogue entre l'opérateur d'une part, et les capteurs et actionneurs du banc d'essai et du moteur à tester d'autre part.

Dans sa version classique, l'organe de commande est associé à une platine, habituellement spécifique pour chaque type de moteur, munie d'un panneau de contrôle lui-même équipé de boutons-poussoirs qui, par l'intermédiaire de dispositifs électromécaniques (relais câblés et logique combinatoire), pilotent les différents éléments d'action sur le banc d'essais. Cet organe de commande est également équipé d'un panneau de visualisation à voyants indiquant à l'opérateur l'état du banc et du moteur dans la phase d'essai en cours.

Cependant, dans l'état de la technique, on observe la faible souplesse d'adaptation de ces platines à des configurations d'essais de plus en plus variées. En outre, la diversité des différents types de moteurs à tester conduit à la conception de platines spécifiques qui sont uniques par type de moteur. Il faut donc procéder à un changement de platine spécifique à chaque changement de type de moteur.

### Buts de l'invention

La présente invention vise à proposer une installation d'essais possédant un organe de commande qui pourrait être programmable et configurable par les responsables (opérateurs commandant les essais) en fonction des besoins spécifiques du test à effectuer.

En outre, la présente invention vise à proposer une solution qui permet de limiter le nombre de platines spécifiques et de ce fait à augmenter la diversité des types de moteur à tester sur le même banc d'essais.

La présente invention vise également à proposer une solution qui permette d'assurer la surveillance en temps réel du banc d'essais et du moteur.

D'autres buts et avantages de la présente invention seront décrits ultérieurement.

### Principaux éléments caractéristiques de l'invention

La présente invention se rapporte à une installation d'essais destinée à la réalisation de tests sur des moteurs, de préférence des moteurs d'avions tels que turboréacteurs ou turbopropulseurs qui sont disposés dans un banc d'essais et qui sont en interaction avec des actionneurs et des capteurs constituant respectivement les sorties et les entrées d'un organe de commande et de contrôle qui est lui-même associé à des moyens permettant l'établissement, le contrôle et la visualisation du point de fonctionnement dudit banc d'essais et dudit moteur en temps réel, caractérisée en ce que lesdits moyens pour l'établissement, le contrôle et la visualisation comprennent au moins une interface opérateur, de préférence à écran tactile, munie d'une pluralité de boutons-poussoirs programmables, chacun desdits boutons-poussoirs étant programmé de sorte que l'action de presser ledit bouton-poussoir déclenche l'exécution d'une action ou séquence d'actions prédéfinie sur ledit moteur en fonctionnement et/ou ledit banc d'essais.

De préférence, l'interface opérateur comprend plusieurs pages de boutons-poussoirs programmables, et de manière avantageuse, une pluralité de boutons-poussoirs programmables appartenant à une même page n'est pas visible sur l'écran tactile.

Avantageusement, l'action ou séquence d'actions déclenchée par l'action de presser un bouton-poussoir comprend l'activation d'au moins une autre action ou séquence d'actions associée à un autre bouton-poussoir.

De manière avantageuse, pour chaque bouton-poussoir visible est associé un champ additionnel sous la forme d'un voyant, ledit voyant décrivant l'état correspondant audit bouton-poussoir.

Dans l'installation selon l'invention, lesdits boutons-poussoirs (31) peuvent aussi bien être activés sur l'écran tactile ou par l'intermédiaire d'une souris d'ordinateur.

Avantageusement, l'installation de l'invention comporte des moyens pour envoyer un message codé sous forme ASCII par une ligne de communication série à ladite unité centrale de contrôle, par pression ou cliquage sur un desdits boutons-poussoirs, ledit message ASCII comprenant au moins l'adresse dudit bouton-poussoir.

Cette installation peut en outre comporter des moyens, au niveau de l'unité centrale de contrôle, permettant de décoder ledit message ASCII et de lui associer de manière univoque un fichier descriptif des actions et contrôles à réaliser au niveau du banc d'essais ou du moteur.

Avantageusement, l'unité centrale de contrôle est câblée à une pluralité d'entités physiques situées au niveau du banc d'essais et/ou du moteur.

De manière avantageuse, l'installation comprend en outre au moins un module de commande intelligent déporté près d'un actionneur et commandé par l'intermédiaire d'un bus de terrain.

La présente invention se rapporte également à un procédé de programmation et de configuration de l'ensemble interface opérateur / organe de contrôle et de commande d'une installation selon la présente invention, caractérisé en ce qu'il comprend les étapes suivantes :
- choisir un menu relatif à la gestion de l'écran tactile;
- définir un type de moteur;
- choisir au moins une page de boutons-poussoirs sur l'écran tactile;
- définir, pour au moins un desdits boutons-poussoirs de ladite page, à la fois pour l'état "On" et pour l'état "Off" dudit bouton-poussoir, le texte devant apparaître sur ledit bouton-poussoir, la couleur dudit texte, la couleur de l'arrière-plan, le texte apparaissant dans le champ de type voyant définissant ledit état correspondant au bouton-poussoir, la couleur dudit texte et la couleur de l'arrière-plan dudit champ.

La présente invention concerne également un procédé de programmation et de configuration de l'organe de commande et contrôle présent dans l'installation de l'invention comprenant les étapes suivantes :
- choisir un menu relatif à la gestion de l'organe de commande et contrôle proprement dit;
- définir un type de moteur;
- choisir au moins une page de voyants sur l'écran tactile;
- définir, pour au moins un desdits voyants de ladite page, à la fois pour l'état "On" et pour l'état "Off" dudit voyant, le texte devant apparaître sur ledit voyant, la couleur dudit texte et la couleur de l'arrière-plan;
- définir de manière univoque l'entité physique associée audit voyant.

Ce procédé de programmation et configuration peut en outre comprendre les étapes suivantes :
- définir un type de moteur;
- choisir au moins une page de boutons-poussoirs de commande;
- associer de manière univoque au moins un bouton-poussoir à une entité physique du banc d'essais ou du moteur;
- définir de manière univoque, pour ladite entité physique, au moins une action programmée, correspondant à un changement d'état de ladite entité physique.

De préférence, ladite entité physique appartient au groupe constitué par une entrée digitale, une sortie digitale, une entrée analogique, un module intelligent déporté, un bouton-poussoir tactile et un voyant tactile.

De préférence, ladite action ou séquence d'actions comprend la définition d'au moins une action ou séquence d'actions associée à l'activation d'au moins un autre bouton-poussoir.

Avantageusement, un temps mort est défini entre deux actions ou séquences d'actions consécutives dans le temps.

De manière avantageuse, une durée maximale est définie, durant laquelle une action ou séquence d'actions doit être entièrement réalisée, faute de quoi une action ou séquence d'actions alternative est réalisée, après dépassement de ladite durée maximale.

Un tel organe de commande et contrôle présente plusieurs avantages. Un de ces avantages est qu'il est configurable pour tous types de moteurs (turboréacteur, turbopropulseur, etc.) et pour toute configuration du banc d'essais, ce qui simplifie grandement les procédures de vérification.

Cet organe permet également d'assurer une surveillance en temps réel de l'état du banc et du moteur sur la base d'une séquence de l'essai préalablement définie par l'opérateur.

Le langage d'interface entre l'opérateur et l'organe de commande et de contrôle utilisé pour piloter ledit organe ou pour en obtenir des informations est un langage facilement compréhensible et ne présente pour l'opérateur aucune difficulté d'adaptation.

### Brève description des figures

La figure 1 représente l'installation d'essais selon la présente invention comprenant ses principaux éléments constitutifs.

La figure 2 représente l'image d'un écran de contrôle présentant le menu de configuration et d'exécution pour l'écran tactile.

La figure 3 représente l'image d'un écran de contrôle présentant le menu général de configuration et d'exécution de l'organe E.C.M.

La figure 4 représente l'image d'un écran de contrôle présentant le menu de configuration de l'organe E.C.M. à partir d'une autre machine.

La figure 5 représente l'image de l'écran de configuration des noms de moteurs.

La figure 6 représente l'image d'une page d'écran tactile lors du fonctionnement de l'organe E.C.M.

La figure 7 représente l'image de la première fenêtre de la section "Configuration des Boutons tactiles", permettant de choisir le moteur pour lequel la configuration est destinée.

La figure 8 représente l'image de la fenêtre permettant de choisir une des 25 pages à configurer.

La figure 9 représente l'image de la fenêtre permettant de définir le libellé et la couleur du texte ainsi que la couleur d'arrière-plan des boutons et de leurs voyants respectivement.

La figure 10 représente l'image de la fenêtre de configuration obtenue en "double-cliquant" sur un bouton de la figure 9.

La figure 11 représente l'image de la fenêtre de surveillance de l'état du banc d'essais et du moteur en temps réel lors du fonctionnement de l'organe E.C.M.

La figure 12 représente l'image de la première fenêtre de la section "Configuration des Voyants", permettant de choisir le moteur pour lequel la configuration est destinée.

La figure 13 représente l'image de la fenêtre permettant de choisir un des 49 voyants à configurer, en "double-cliquant" sur chacun de ceux-ci.

La figure 14 représente l'image de la première fenêtre de la section "Configuration des Actions", permettant de choisir le moteur pour lequel la configuration est destinée.

La figure 15 représente l'image de la fenêtre permettant de choisir un des boutons à configurer, pour l'envoi d'un message de commande (25 pages de 100 boutons).

La figure 16 représente l'image d'un exemple de fenêtre de configuration de séquence d'actions, obtenue en "double-cliquant" sur le bouton choisi.

### Description détaillée de plusieurs formes d'exécution préférées de l'invention

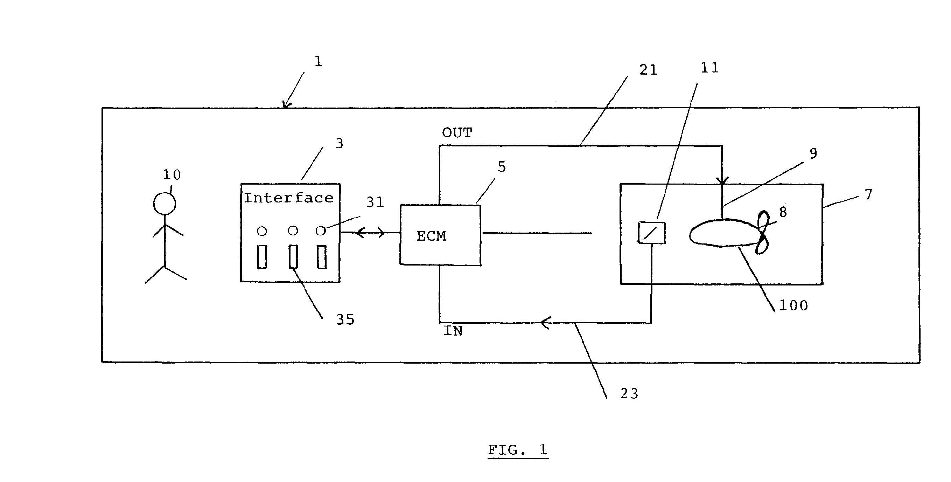

La figure 1 décrit schématiquement une installation d'essais 1 selon la présente invention. Elle comprend essentiellement un banc d'essais 7 se présentant sous la forme d'une chambre dans laquelle est disposé un moteur 100. Ce banc d'essais est commandé par un organe de commande et de contrôle 5 (E.C.M.) qui, sur base d'informations (entrées digitales ou analogiques 23) transmises par des capteurs 11, agit sur des actionneurs 9 (sorties digitales 21). L'opérateur pilote l'organe de commande et de contrôle 5 par l'intermédiaire d'une platine 3 de commande et de visualisation qui sert d'interface entre l'opérateur 10 et l'organe de commande et de contrôle 5 munie essentiellement de boutons poussoirs 31 et de voyants 35.

La diversité des types de moteur à tester dans un même banc a conduit à la conception et la réalisation d'une installation d'essais munie d'un ensemble platine / organe E.C.M. unique, qui peut être programmable et configurable par les responsables des essais en fonction de leurs besoins.

L'ensemble platine / organe E.C.M. programmable se compose essentiellement de deux systèmes indépendants, une interface opérateur 3 et un organe de commande et de contrôle 5, qui dialoguent entre eux par des canaux de communication. L'ensemble est entièrement configurable, aussi bien pour les commandes que pour les contrôles des organes (capteurs + actionneurs) du banc d'essais et du moteur à tester.

Il peut être adapté à tout banc et à tout type de moteur, pour autant que les capacités prises en compte soient correctement dimensionnées et ceci sans nécessiter aucune compilation de programmes spécifiques.

### Interface Opérateur (3)

L'interface opérateur permet d'entrer des commandes ou des séquences de commandes au moyen d'un écran tactile ou d'une souris, de visualiser l'état des boutons de commande actifs qui sont représentés sur l'écran par des voyants 35 et d'activer, sur le même écran, des voyants caractérisant l'état du système en fonction des actions qui ont été demandées par l'opérateur.

Ces boutons et voyants sont entièrement configurables par l'opérateur aussi bien au niveau des couleurs que des libellés.

### Organe de commande et de contrôle (5)

Le deuxième dispositif, organe de commande et de contrôle E.C.M. proprement dit, dans une configuration standard, peut piloter et contrôler des entrées ou sorties discrètes (entrées optocouplées, sorties par relais ou SSR, etc.).

L'organe E.C.M. contrôle également des modules de commande intelligents déportés, équipés de microprocesseurs actionnant des sorties de type relais, par l'intermédiaire d'un bus de terrain.

L'organe de commande et de contrôle est couplé à un écran de visualisation qui permet d'afficher en permanence des voyants représentant à tout moment l'état du processus commandé et contrôlé par l'organe E.C.M.

Ces voyants peuvent être configurés et paramétrés par l'utilisateur en fonction de l'essai à réaliser et du moteur à tester. L'état de l'ensemble des entrées digitales du système, reflétant l'état du banc d'essais et des commandes moteur, est surveillé en permanence par rapport à des états prévisionnels décrits par l'utilisateur au niveau des configurations. Les alarmes détectées sont visualisées en temps réel sur cet écran.

Lorsqu'une commande en provenance de l'interface opérateur est détectée par l'organe E.C.M., elle est décodée et déclenche le démarrage d'une série d'actions préprogrammées sur les actionneurs du banc et du moteur.

### Capacité et caractéristiques de l'installation d'essais

Selon une forme d'exécution particulièrement préférée de l'invention, un écran tactile fait office d'interface opérateur. C'est donc le dispositif d'entrée des commandes opérateur, qui est configurable et programmable sous forme de pages, chaque page affichée visualisable comportant 25 boutons et 25 voyants. Il ne présente donc pratiquement aucune limitation sur le nombre de boutons-poussoirs et de voyants disponibles.

Les échanges d'informations de commande entre l'interface opérateur et l'organe de pilotage et contrôle se fait par des canaux de communication entre les deux systèmes.

L'appui sur un bouton de commande de l'écran tactile provoque la génération d'une série d'actions et de contrôles au niveau de l'organe E.C.M. Celui-ci attaque directement les actionneurs et vérifie l'état des capteurs. En fonction de la configuration du système, celui-ci peut renvoyer à l'interface opérateur (écran tactile) le résultat instantané du processus de surveillance de l'état du banc d'essais et du moteur en test, afin de remettre à jour la visualisation sur l'écran tactile.

Après validation visuelle par l'opérateur, une nouvelle série d'actions peut être initiée.

L'ordinateur associé à l'organe E.C.M. est équipé de cartes d'entrées/sorties qui peuvent être configurées en entrée ou en sortie suivant les besoins de l'installation. Les signaux digitaux d'entrées/sorties sont conditionnés pour garantir l'isolation galvanique de l'organe E.C.M. par rapport à l'environnement banc/moteur.

En résumé, l'organe E.C.M. présente les caractéristiques suivantes :
- il constitue l'interface entre l'opérateur et les éléments du banc d'essais et du moteur;
- il est entièrement configurable par l'opérateur pour tout type de moteur;
- les commandes sont entrées par l'écran tactile et/ou la souris;
- les commandes peuvent être générées par liaison série;
- les boutons de commande sont visualisés sur un écran;
- l'interface opérateur travaille en multi-pages;
- le système est configurable par un personnel sans connaissances informatiques préalables;
- il est doté d'une interface conviviale, par exemple de type Microsoft® Windows™.

### Principe de fonctionnement

L'organe E.C.M. est constitué d'un ordinateur qui gère les entrées et les sorties digitales des différents capteurs et actionneurs d'un banc d'essais et de son moteur. Il est muni d'un système de visualisation pour contrôler à tout moment l'état du banc et en assure la surveillance en contrôlant toutes les alarmes qui pourraient survenir dans le banc d'essais ou au niveau du turboréacteur en cours d'essai.

Il est connecté à un autre dispositif permettant à l'opérateur de lancer des actions ou des séquences d'actions à réaliser pour assurer le pilotage automatique de l'essai. L'interface homme-machine est dans la plupart des applications constitué de l'écran tactile où sont représentés des boutons-poussoirs logiciels.

L'écran tactile comporte un certain nombre de zones sensibles distinctes, correspondant chacune à un bouton-poussoir, lui-même caractérisé par une couleur déterminée et sur lequel figure un texte représentatif de l'action à déclencher.

Au toucher d'un bouton poussoir, un message est envoyé vers l'organe E.C.M. par une ligne de communication série (RS-232, Ethernet,...). Ce message est décodé par l'organe E.C.M. qui contient, pour chaque bouton de l'écran tactile, un fichier descriptif des actions et des contrôles à réaliser au niveau du banc d'essais ou du moteur.

Ces messages de commande peuvent également être envoyés par tout autre système capable de générer des messages sur une ligne de communication sérielle ce qui permet, notamment, d'associer l'organe E.C.M. à un système d'acquisition et de traitement de données pour permettre l'automatisation complète d'un essai sans intervention d'un opérateur.

Les fichiers d'actions et séquences d'actions à réaliser sont créés par l'intermédiaire d'un logiciel de configuration convivial qui facilite l'encodage.

Les actions ou les contrôles à effectuer se font, d'une part, par l'intermédiaire de cartes d'entrées/sorties digitales. Les signaux digitaux correspondants sont mis en forme et conditionnés dans un dispositif électronique de conditionnement. Ces signaux sont isolés galvaniquement pour éviter toute perturbation électromagnétique parasite.

L'organe E.C.M. peut, d'autre part, commander les éléments d'un banc d'essais à l'aide de modules de commande intelligents déportés près des actionneurs à commander par l'intermédiaire d'un bus de terrain. Chacun de ces modules est équipé d'un microcontrôleur intégré qui décode les signaux qu'il reçoit du bus de terrain et actionne des relais qui contrôlent les contacts permettant d'exécuter les actions à réaliser.

Lorsque l'opérateur appuie sur un bouton de l'écran tactile, le message envoyé à l'organe E.C.M. contient l'adresse de ce bouton, et plus précisément les coordonnées de sa position sur l'écran tactile.

Après réception et décodage du message reçu, l'organe E.C.M. vérifie si une (séquence d')action(s) a été prédéfinie pour ce message et exécute les commandes et les contrôles demandés sur toutes les entrées et sorties digitales en liaison avec le banc d'essai ou le turboréacteur testé.

Ce principe de fonctionnement rend l'organe E.C.M., organe de pilotage et de surveillance, indépendant du turboréacteur à tester et du banc dans lequel se fait l'essai. Il est complètement polyvalent pour tous moteurs et tous bancs d'essais.

Son adaptation à un essai particulier se fait par simple configuration, à l'intérieur de fichiers, des commandes et contrôles à effectuer, sans nécessiter de compilation informatique.

Le grand avantage de cette façon de procéder réside dans le fait que de multiples essais correspondants à des conditions très différentes peuvent être préparés à l'avance sur tout système permettant de générer des fichiers ASCII.

Cette préparation d'essai peut être faite sur une station indépendante de l'organe E.C.M., par exemple dans le bureau de l'ingénieur d'essai, pendant la réalisation d'un essai au banc. Les gains de temps obtenus sont très importants.

### Utilisation des menus

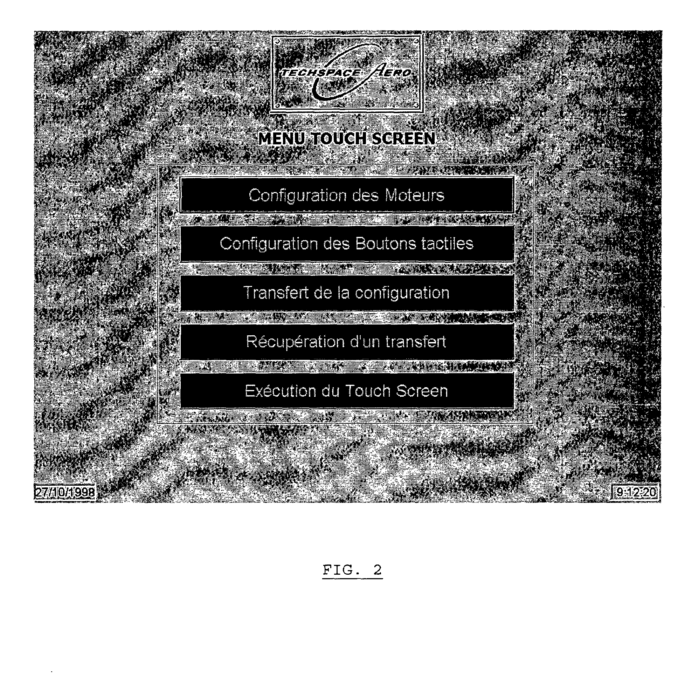

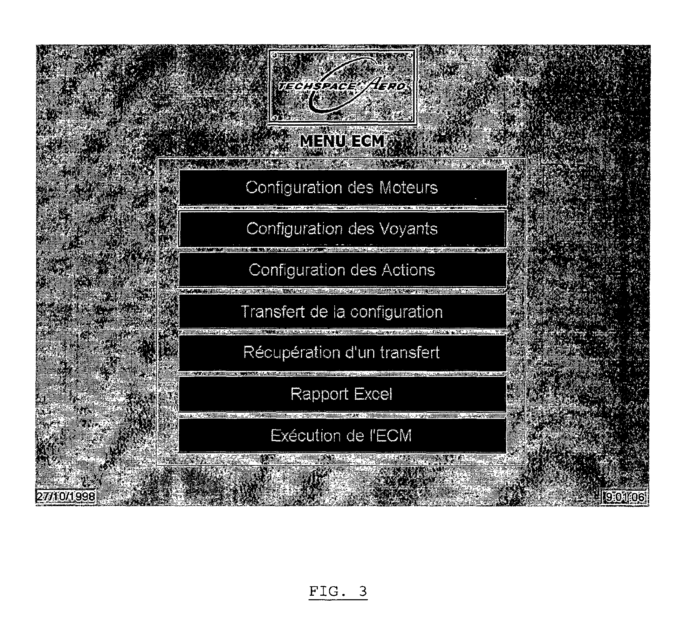

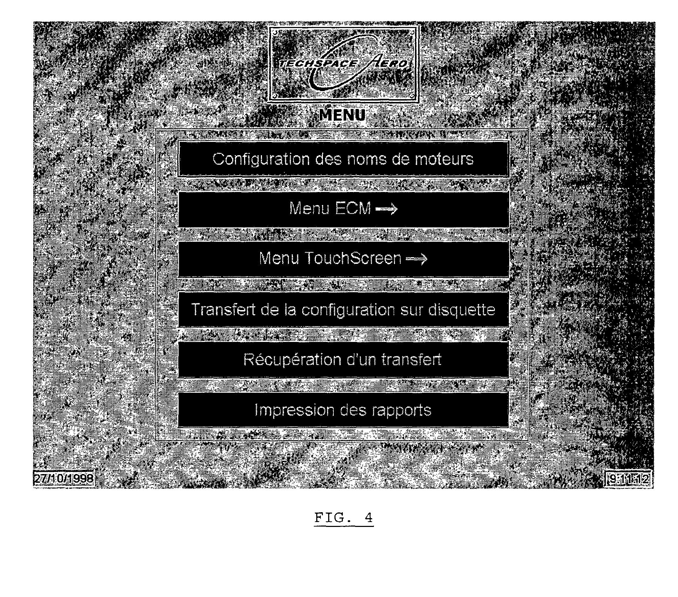

L'organe E.C.M. met à la disposition des utilisateurs trois menus d'utilisation (programmation sous Microsoft® Windows™). Ces menus sont les suivants :
- un menu, représenté à la figure 2, pour la configuration de l'interface opérateur et pour l'exécution des opérations, par l'intermédiaire de l'écran tactile et/ou de la souris (*TouchScreen*) ;
- un menu, représenté à la figure 3, pour la configuration de l'organe E.C.M. lui-même et l'exécution des actions et contrôles de l'organe E.C.M.;
- un menu, représenté à la figure 4, pour la configuration de l'ensemble du système permettant de configurer l'organe E.C.M. à partir d'une autre machine (par exemple dans un bureau).

### Configuration des noms de moteurs

L'organe E.C.M. permet de configurer un banc d'essais pour un certain type de moteur. La liste de ces moteurs est établie par la section "Configuration du nom des moteurs" dans le menu de configuration d'ensemble.

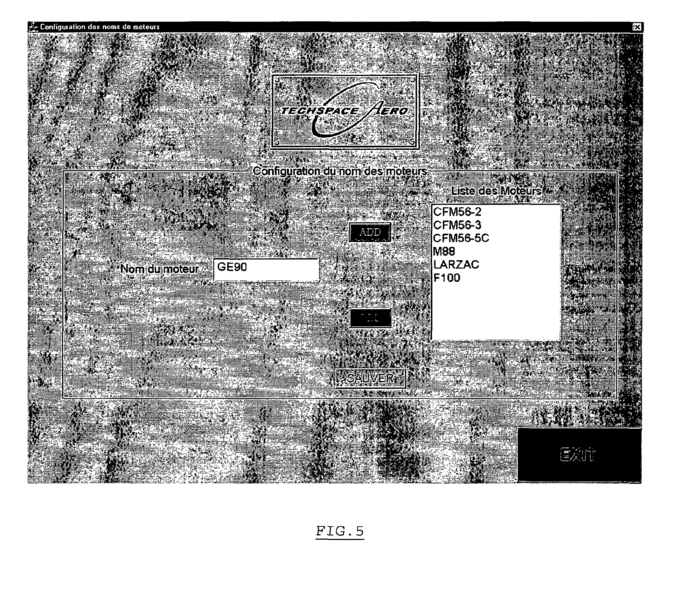

Il est possible soit d'ajouter (maximum 10), soit de supprimer des moteurs avec les boutons "Add" et "Del" (Figure 5).

### Configuration matérielle de l'organe E.C.M.

Un outil de configuration permet au personnel qualifié de configurer le matériel (hardware) utilisé. Cet outil permet de modifier les ports de communication série, au cas où un port deviendrait défectueux, ou de modifier le dispositif matériel de l'organe E.C.M., par exemple ajouter un module intelligent déporté, ajouter des entrées analogiques, utiliser moins d'entrées digitales au profit de sorties digitales, etc.

### Configuration de l'écran tactile

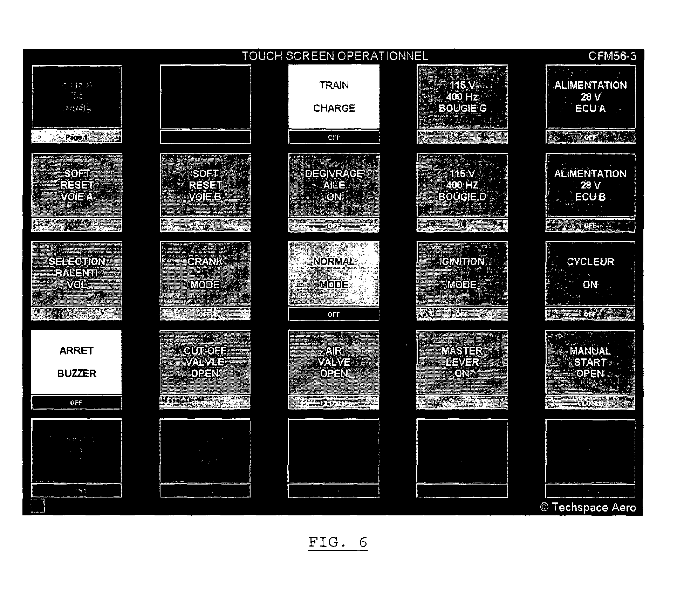

L'écran tactile est composé de 25 boutons et de 25 voyants par page; il dispose en tout de 25 pages. La figure 6 représente un exemple d'une page tactile lors du fonctionnement de l'organe E.C.M.

La configuration de l'interface tactile s'effectue à l'aide de la section "Configuration des Boutons tactiles" dans le menu "TouchScreen" (figure 2). Cet outil permet de définir les différentes pages contenant les 25 boutons d'actions.

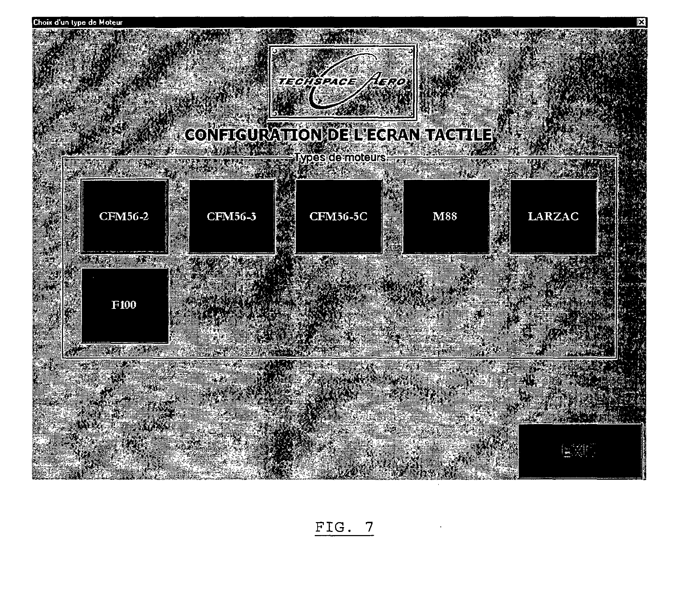

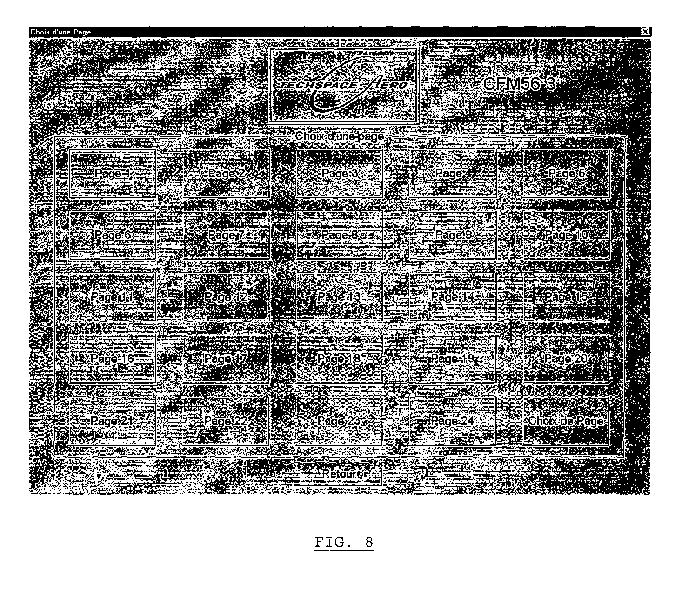

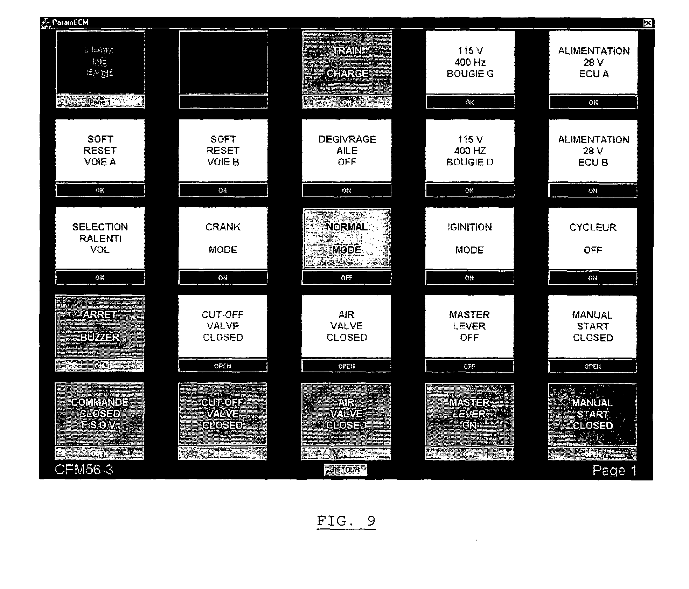

La première fenêtre qui apparaît permet de choisir le moteur pour lequel la configuration est destinée (Figure 7); la deuxième fenêtre permet de choisir une des 25 pages à configurer (Figure 8); la troisième fenêtre permet de définir le texte des boutons et de leurs voyants ainsi que la couleur du texte et de l'arrière-plan du bouton (Figure 9).

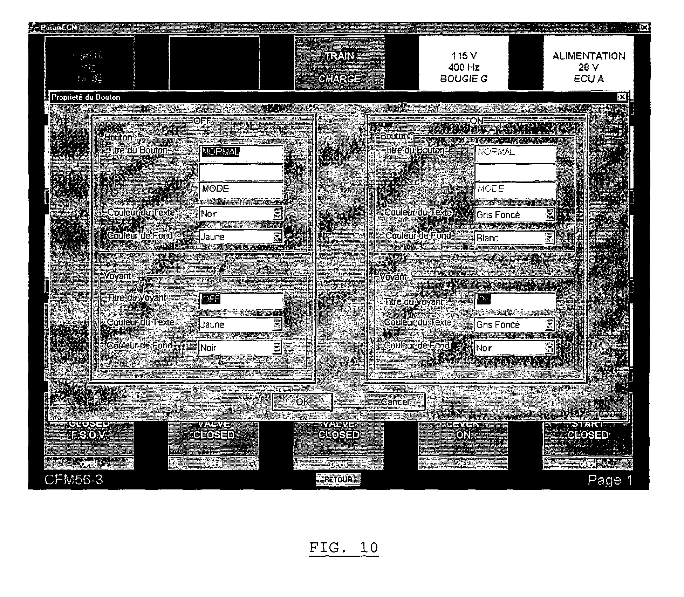

Pour configurer un bouton et son voyant, il suffit de "double-cliquer" sur le bouton choisi. Une fenêtre de configuration donnée est présentée comme sur la figure 10.

L'exemple repris sur la figure 10 est celui du bouton jaune "NORMAL MODE" au milieu de l'écran de la figure 8. L'utilisateur définit dans la fenêtre "Propriété du Bouton" respectivement le libellé et la couleur du texte, ainsi que la couleur de l'arrière-plan (fond) pour le bouton et le voyant.

On remarquera que le bouton supérieur gauche est utilisé, dans le fonctionnement de l'organe E.C.M., pour le changement de page (figure 9). Il est donc réservé à cet effet. De même, la page 25 est utilisée pour le choix de page, ce qui limite le choix à 24 pages, le bouton inférieur droit étant réservé au blocage/déblocage de l'écran tactile (figure 8) afin d'éviter l'envoi de commandes non souhaitées par l'opérateur dans certaines phases critiques de l'essai (sécurité).

### Configuration des voyants de l'organe E.C.M.

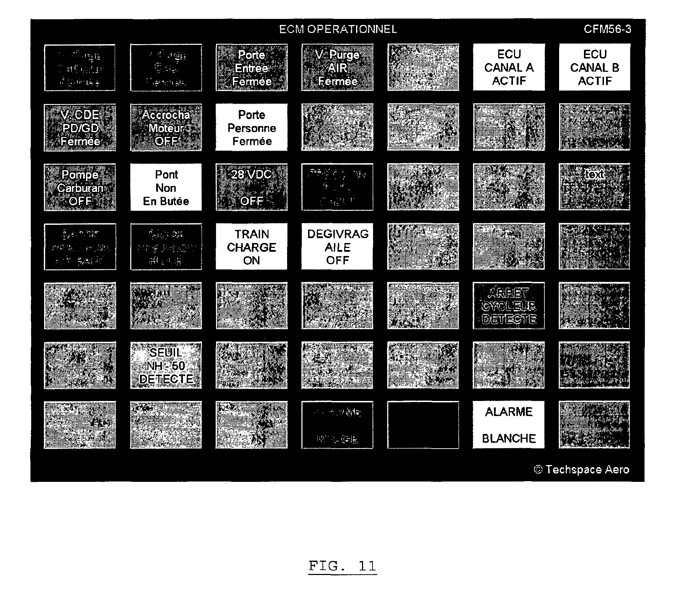

L'écran de visualisation de l'organe E.C.M. (commandes et contrôles) est composé de 49 voyants qui correspondent à la surveillance en temps réel de l'état du banc d'essais et de son moteur selon les entrées définies par l'utilisateur au moment de la configuration. Un exemple de page de surveillance lors du fonctionnement de l'organe E.C.M. est donné par la figure 11.

La configuration de l'interface de visualisation de l'organe E.C.M. s'effectue à l'aide de la section "Configuration des Voyants" du Menu E.C.M. Cet outil permet de configurer les 49 voyants de l'écran de visualisation.

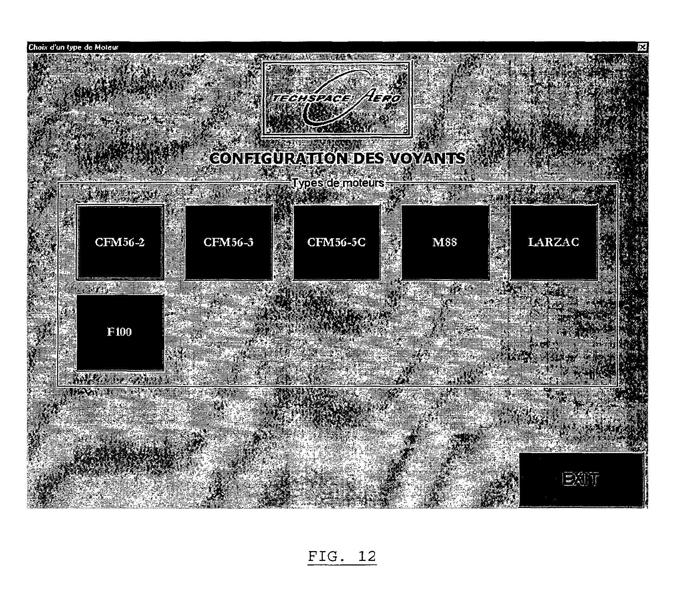

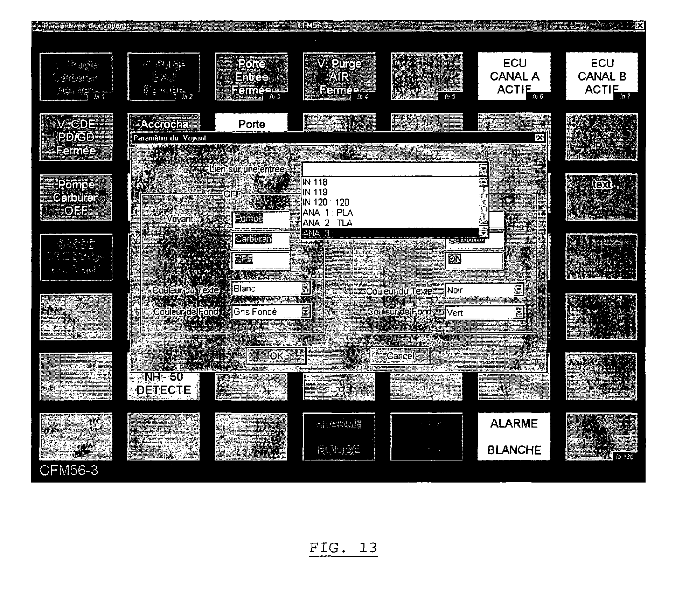

La première fenêtre permet de choisir le moteur pour lequel la configuration est destinée (Figure 12). La seconde fenêtre présente les 49 voyants de l'organe E.C.M. dans l'état OFF. Il suffit de "double-cliquer" sur le voyant de son choix pour le configurer (Figure 13).

### Correspondance entre les voyants de l'écran de visualisation et des entrées physiques surveillées

Les voyants de l'écran de visualisation indiquent le résultat en temps réel de la surveillance de l'état physique d'une entrée, pour une phase particulière de l'essai, tel que décrit dans la configuration de l'organe E.C.M. Pour ce faire, chaque voyant de l'écran de visualisation doit être affecté à une entrée physique à surveiller.

Un voyant peut être lié à une entrée digitale ou à une expression analogique, comme par exemple le voyant "Pompe Carburant" est relié à l'entrée analogique ANA 3 qui représente l'état du capteur de la pompe à carburant. Un rectangle noir situé dans le coin inférieur droit du voyant indique si celui-ci est déjà relié à une entrée (figure 13). L'état ON du voyant correspond à l'état du voyant en cas de défaut. Par exemple, si le premier voyant est relié à la première entrée digitale et que cette entrée est surveillée à bas, le voyant sera en position défaut (ON) si l'entrée digitale est alimentée et inversement.

Si le voyant de l'organe E.C.M. doit surveiller une entrée directement au lancement du système, il faudra établir l'état initial de l'entrée reliée à celui-ci dans la programmation des actions (voir ci-dessous).

### Configuration des séquences d'actions associées à un bouton de commande

La configuration des séquences d'actions de l'organe E.C.M. s'effectue à l'aide d'une interface logicielle à menus déroulants de la section "Configuration des Actions" du menu E.C.M. Cet outil permet de configurer les séquences d'actions relatives aux différents boutons.

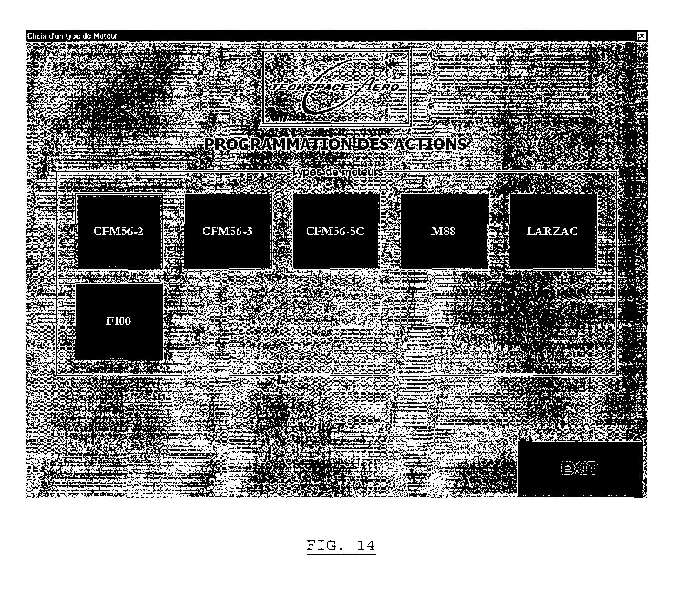

Une première fenêtre permet de choisir le moteur pour lequel la configuration est destinée (Figure 14).

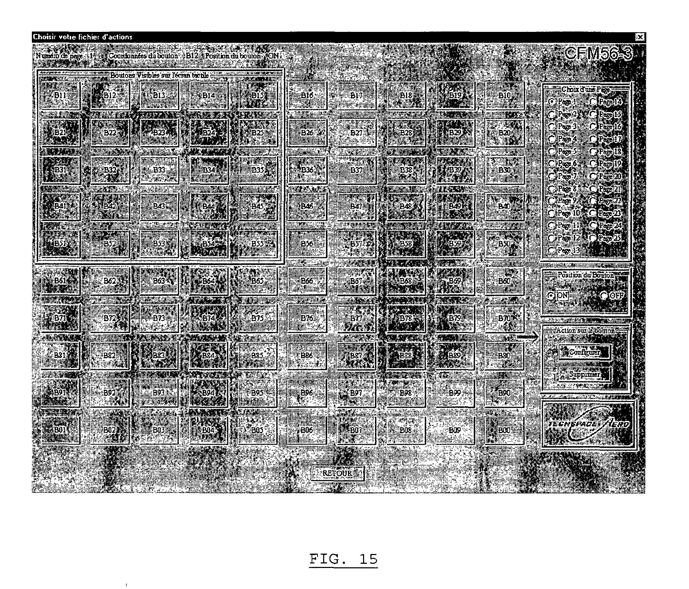

La deuxième fenêtre (Figure 15) permet de choisir le bouton à configurer. Dans cette fenêtre sont représentés tous les boutons accessibles pour l'envoi d'un message de commande. Ils sont caractérisés par leurs coordonnées (ligne - colonne). Les 25 premiers, de B11 à B55 sont ceux qui sont visibles sur l'écran tactile et donc accessibles à l'opérateur. Les autres sont des boutons dits "virtuels", non visibles sur l'écran, mais qui permettent de lancer les actions et séquences d'actions en utilisant le même principe.

Chacun de ces boutons, visibles ou virtuels, peut avoir deux états, le premier correspondant à l'état "enfoncé", le second à l'état "relâché".

Le dispositif permet également de définir 25 pages d'écran, ce qui offre une possibilité très importante de configuration du système (équivalente à 5000 messages de commande).

Dans la pratique ,la configuration se fait en réalisant les étapes suivantes :
- choisir le numéro de page dans la section "Choix d'une page" (figure 15) ;
- choisir le bouton qui lancera les actions parmi l'un des 100 boutons, dont, pour mémoire, 25 sont visibles à l'écran et 75 sont virtuels. Le bouton B11 n'est jamais appelé directement au niveau de l'écran tactile car il est réservé à un changement de page. Dès lors, il peut être utilisé comme bouton virtuel;
- choisir ensuite l'état du bouton dans la section "Position du bouton" (ON ou OFF).

Le fichier d'actions peut alors être configuré (section "Action sur le bouton").

Parmi les actions possibles, outre les commandes et les contrôles, le système permet, par configuration, qu'une des actions associée à un bouton puisse lancer une commande correspondante à un autre bouton, ce qui permet de réaliser des séquences d'actions très complexes en imbriquant dans une séquence d'actions une séquence correspondant à une autre commande que celle en cours. Ce mécanisme permet ainsi de faire du pilotage conditionnel automatique sans nécessiter l'intervention de l'opérateur.

Chaque page de l'écran tactile étant composée de 100 boutons dont 75 sont virtuels, ceux-ci permettent de définir des actions qui seront exécutées automatiquement par l'organe E.C.M. et de rendre certaines étapes de l'essai entièrement récursives.

### Exemple d'utilisation d'un bouton virtuel.

Si une action n'a pas pu être exécutée dans un délai préprogrammé, les boutons virtuels qui seront référencés dans les séquences d'actions correspondantes seront redirigés vers d'autres séquences, alternatives, qui exécuteront des actions de correction.

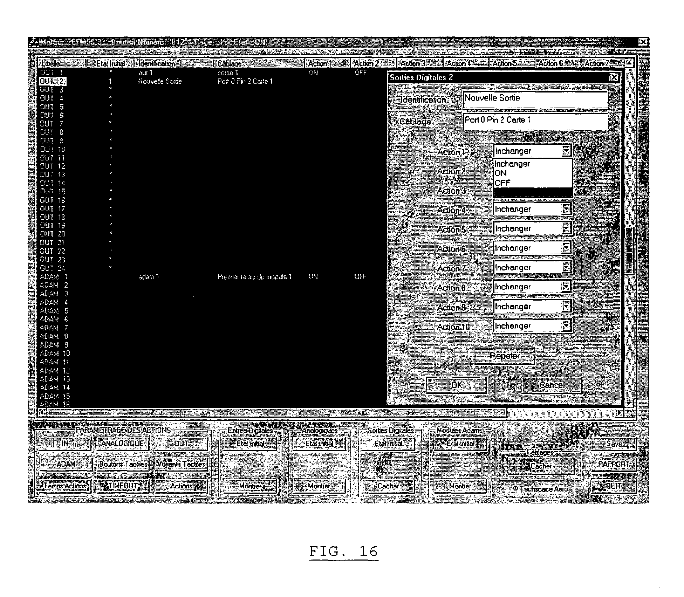

La troisième fenêtre permet de définir les actions que l'organe E.C.M. doit exécuter (figure 16). Elle est constituée d'une série de colonnes dont les rôles sont les suivants :
- la colonne "Libellé" reprend le nom des différents éléments du fichier d'actions : les entrées physiques des organes à surveiller, les sorties physiques à positionner pour actionner les dispositifs de commandes, les relais des modules intelligents déportés, les entrées analogiques à tester, etc.;
- la colonne "Identification" qui permet d'identifier plus précisément un libellé (par ex. : "IN 2" est le contact du contacteur de la pompe à carburant) ;
- la colonne "Câblage" qui permet d'avoir une vue d'ensemble du câblage des entrées/sorties digitales de l'organe E.C.M. (exemple : "IN 5" est câblée sur l'entrée 4 de la carte digitale d'entrée du 1er tiroir du conditionneur de signaux);
- les colonnes "Action" reprennent les différentes actions à effectuer;
- la colonne "Etat Initial" représente l'état de l'organe E.C.M. à son lancement. Par exemple, le relais contrôlant les bougies d'allumage du moteur doit être fermé au lancement du système ou la pompe à carburant doit être directement surveillée.

### Structuration du fichier décrivant les séquences d'actions

La structure du fichier de configuration des actions reprend, pour chaque colonne correspondant à une séquence d'actions, le descriptif complet et exhaustif de toutes les entrées, de toutes les sorties, de toutes les valeurs analogiques, de tous les timings, les alarmes à surveiller, etc., nécessaires pour définir l'état de fonctionnement dans lequel l'opérateur veut que les éléments du banc d'essai et du turboréacteur se trouvent à un moment bien précis de l'essai.

### Convention utilisée

Le marquage d'un bouton de commande suit une syntaxe particulière. Cette syntaxe sera utilisée lors de la configuration des séquences d'actions d'un bouton de commande pour faire référence à une séquence d'actions d'un autre bouton :
**Bxyz ou bxyz,**
où
B est le bouton à l'état ON,
b est le bouton à l'état OFF,
x est la ligne de la position du bouton de commande,
y est la colonne de la position du bouton de commande,
z est la page du bouton de commande.

Ainsi, par exemple, B561 est le bouton à l'état ON situé en ligne 5 colonne 6 page 1, il s'agit donc ici d'un bouton virtuel car il dépasse les coordonnées maximales d'un bouton de l'écran tactile.

La figure 16 donne un exemple de fenêtre de configuration de séquences d'actions.

### Les entrées ("IN") (23)

L'organe E.C.M. possède une carte d'acquisition capable de prendre en charge un nombre d'entrées digitales déterminé au départ selon les besoins de l'application. Pour chaque entrée et pour chaque action programmée, l'utilisateur a le choix entre 5 états de configuration possibles qui sont :
- *Inchangé* : l'état de l'entrée correspondante n'influence pas le comportement du processus testé;
- *Bas* : l'entrée physique correspondante est surveillée dans l'état "Bas". Le voyant relié à cette entrée se positionne à ON (on dit aussi en défaut) si l'entrée passe à l'état "Haut". En cas de défaut, l'utilisateur a la possibilité d'exécuter une séquence d'actions indiquée dans "Actions défaut". Par exemple, B661 est une séquence d'actions en cas de défaut et correspond au bouton virtuel à l'état ON, ligne 6, colonne 6, page 1;
- *Haut* : l'entrée physique correspondante est surveillée dans l'état "Haut". Le voyant relié à cette entrée se positionne à ON (on dit aussi en défaut) si l'entrée passe à l'état "Bas". En cas de défaut, l'utilisateur a la possibilité d'exécuter une séquence d'actions indiquée dans "Actions défaut". Par exemple, b762 est une séquence d'actions en cas de défaut et correspond au bouton virtuel à l'état OFF, ligne 7, colonne 6, page 2;
- *Attend Bas* : l'organe E.C.M. attend que l'entrée physique correspondante passe à l'état "Bas" endéans un temps préprogrammé, le "Time Out". Si la condition n'est pas remplie endéans le temps assigné par "Time Out", la séquence d'actions en cours est stoppée et dérivée vers une autre séquence d'actions programmée par un bouton de commande réel ou virtuel défini dans "Action cas de Time Out" et qui à la même syntaxe qu'un bouton de commande classique;
- *Attend Haut* : l'organe E.C.M. attend que l'entrée physique correspondante passe à l'état "Haut" endéans un temps préprogrammé, le "Time Out". Si la condition n'est pas remplie endéans le temps assigné par "Time Out", la séquence d'actions en cours est stoppée et dérivée vers une autre séquence d'actions programmée par un bouton de commande réel ou virtuel défini dans "Action cas de Time Out" et qui a la même syntaxe qu'un bouton de commande classique.

### Les expressions analogiques ("ANALOGIQUE")

Lorsqu'il est connecté au système d'acquisition de données du banc d'essai, l'organe E.C.M. a la possibilité de contrôler des valeurs analogiques (comme le PLA). Il faut indiquer le libellé que l'on veut contrôler dans la colonne "Identification" (ex. PLA), avec la syntaxe identique à celle utilisée dans la base de données du système d'acquisition, et entrer une expression de comparaison de type "> 27.5 ", par exemple. L'organe E.C.M. attendra alors que le PLA soit plus grand que 27.5° pour passer à l'action suivante.

Il s'agit donc d'un test d'attente sur des valeurs d'entrées analogiques lues par l'organe E.C.M. via le réseau Ethernet transmettant les données d'acquisitions analogiques.

Le contrôle analogique est similaire au contrôle des entrées digitales, l'utilisateur a la possibilité d'effectuer une action spécifique en cas de "Time Out" ou en cas de défaut.

On remarquera que, si un voyant de surveillance est lié à une entrée analogique, la surveillance de ce voyant est alors basée sur la dernière expression rencontrée.

### Les sorties digitales ("OUT") (21)

L'organe E.C.M. possède des sorties digitales (discrètes) pour commander certains composants du banc d'essais ou du moteur.

L'utilisateur dispose, par sortie et par action, de 3 valeurs possibles pour positionner l'état des sorties physiques :
- *Inchangé* : ne pas changer l'état de la sortie digitale;
- *ON* : positionner la sortie de façon à actionner le relais correspondant à cette sortie;
- *OFF* : positionner la sortie de façon à désactiver le relais correspondant à cette sortie.

### Les sorties des modules intelligents déportés

L'organe E.C.M. possède également des modules intelligents déportés qui sont des actionneurs intelligents commandant quatre relais par l'intermédiaire d'un bus de terrain. Ceux-ci commandent certains organes du banc d'essais ou du moteur.

L'utilisateur dispose, par sortie de module et par action, de 3 valeurs possibles pour positionner chaque relais des modules de sorties :
- *Inchangé* : ne pas changer l'état de la sortie;
- *ON :* positionner la sortie de façon à actionner le relais correspondant à cette sortie;
- *OFF :* positionner la sortie de façon à désactiver le relais correspondant à cette sortie.

### Les boutons tactiles ("Boutons Tactiles")

L'organe E.C.M. peut positionner l'état d'un bouton de l'écran tactile (interface opérateur) à l'état ON ou OFF. L'utilisateur à la possibilité d'interdire l'action d'un bouton de commande (Inhibé) ou d'obliger l'organe E.C.M. à attendre qu'il positionne un bouton dans un certain état (Attend On, Attend OFF).

Par bouton et par action, l'utilisateur peut définir 6 valeurs possibles associées à chaque bouton de commande :
- *Inchangé* : l'organe E.C.M. ne modifie pas l'état du bouton de commande;
- *ON* : l'organe E.C.M. fixe l'état du bouton de commande de l'écran tactile à ON;
- *OFF* : l'organe E.C.M. fixe l'état du bouton de commande de l'écran tactile à OFF;
- *Attend ON* : l'organe E.C.M. attend que le bouton de commande de l'écran tactile correspondant soit actionné à l'état "OFF" endéans un temps préprogrammé, le "Time Out". Si la condition n'est pas remplie endéans le temps assigné par "Time Out", la séquence d'actions en cours est stoppée et dérivée vers une autre séquence d'actions programmée par un bouton de commande réel ou virtuel défini dans "Action cas de Time Out" et qui a la même syntaxe qu'un bouton de commande classique.
- *Attend OFF :* l'organe E.C.M. attend que le bouton de commande de l'écran tactile correspondant soit actionné à l'état "ON" endéans un temps préprogrammé, le "Time Out". Si la condition n'est pas remplie endéans le temps assigné au "Time Out", la séquence d'actions en cours est stoppée et dérivée vers une autre séquence d'actions programmée par un bouton de commande réel ou virtuel défini dans "Action cas de Time Out" et qui a la même syntaxe qu'un bouton de commande classique.
- *Inhibé* : le bouton de commande est inhibé et ne s'exécute pas si l'utilisateur essaie de l'activer. Lors de l'action suivante, le bouton reprend son état normal, c'est à dire non inhibé.

### Les voyants tactiles ("Voyants Tactiles")

L'organe E.C.M. peut positionner l'état d'un voyant de l'écran tactile.

Par voyant et par action, il existe 3 valeurs possibles associées à chaque voyant de l'écran tactile : Inchangé : l'organe E.C.M. ne modifie pas l'état du voyant.
- *ON* : l'organe E.C.M. fixe l'état du voyant de l'écran tactile à "ON";
- *OFF* : l'organe E.C.M. fixe l'état du voyant de l'écran tactile à "OFF".

### Les temps de passage à l'action suivante ("Temps Actions")

L'organe E.C.M. exécute les actions programmées dans les colonnes "Action N (N=1,2,...)", configurées par l'utilisateur, dans l'ordre croissant (de l'Action 1 à l'Action 10). Pour chaque bouton de commande, le temps de passage d'une colonne d'actions à la colonne d'actions suivante de la séquence est décrite dans une valeur de "timing" dite "temps de passage à l'action suivante". Dès qu'une colonne d'actions est terminée, le temps de passage à l'action suivante est testé. Après écoulement de cette temporisation, l'organe E.C.M. exécute alors la colonne d'actions suivante configurée dans la séquence pour autant qu'elle soit programmée. L'unité de "timing" utilisée est la milliseconde.

Exemple : temporiser pour laisser le temps à un relais de s'actionner.

### Les "Time Out" ("TIMEOUT")

Les "Time Out" sont utilisés pour ne pas bloquer l'organe E.C.M. indéfiniment sur l'attente d'un événement ("Attend Entrée Haut", "Attend Entrée Bas", "Attend Bouton On", "Attend Bouton OFF" ou expression analogique: "PLA > 27.5").

Si le temps d'attente d'un événement atteint le temps de "Time Out" programmé, l'action en cours est arrêtée et une nouvelle séquence d'actions paramétrée dans "Action en cas de Time Out" est lancée. L'unité utilisée est la milliseconde.

### Les actions ("Actions")

Le paramètre "Actions" désigne une séquence d'actions à exécuter si l'organe E.C.M. est en "Time Out" sur l'attente d'un événement ("Attend Haut", "Attend Bas", etc.). Ce paramètre doit suivre la syntaxe Bxyz (Ex : B651).

### La vue matérielle ("Câblage")

Ce bouton permet d'afficher la colonne "Câblage" qui permet de visualiser rapidement la connectique des entrées/sorties.

On clique à nouveau sur ce bouton pour dissimuler cette colonne.

### Initialisation à la mise sous tension

L'utilisateur doit déterminer l'état initial de l'environnement que l'organe E.C.M. rencontrera dès la mise sous tension (état des entrées, état des sorties, etc.) afin de prendre en compte l'état réel des entrées et sorties au repos (c'est-à-dire quand l'organe E.C.M. est hors service).

Les états sont programmés par les boutons "Etat initial" ou par un double-clic droit sur l'entrée ou la sortie choisie. La syntaxe est la suivante :
* : non initialisé;
0 : Bas pour les entrées, OFF pour les relais;
1 : Haut pour les entrées, ON pour les relais.

Une série de boutons d'aide à la configuration a été introduite dans le menu de façon à faciliter la configuration du système. Leur fonctionnalité est décrite ci-dessous.

### La vue matérielle "Câblage"

Ce bouton permet d'afficher la colonne "Câblage" qui permet de visualiser rapidement la connectique des entrées/sorties.

### Les états initiaux ("Entrées Digitales", "Analogiques", "Sorties Digitales", "Modules déportés")

Ces boutons permettent de placer des valeurs initiales pour les entrées/sorties, qui correspondent à la configuration de sécurité du banc.

L'état initial permet de surveiller les entrées ou de positionner les sorties directement au démarrage de l'organe E.C.M..

### Le rapport papier ("Rapport")

Ce bouton permet d'enregistrer la séquence d'actions dans un format Excel. La section "Rapport Excel" du menu E.C.M. permet d'imprimer ce rapport.

### La sauvegarde ("Save")

Le fichier d'actions n'est modifié et enregistré que lorsque l'opérateur clique sur ce bouton.

### La sortie du programme ("QUIT")

Ce bouton permet le retour à la fenêtre précédente pour configurer un autre fichier d'actions.

### Remarques :

- un double-clic droit sur un libellé ("IN 1", "OUT 20", etc.) permet de changer son état initial;
- un double-clic gauche sur un libellé permet de programmer les actions à effectuer.

### Exemple de programmation d'un bouton

Le Tableau 1 donne la séquence d'actions effectuées lorsqu'on active le bouton "B12.1".

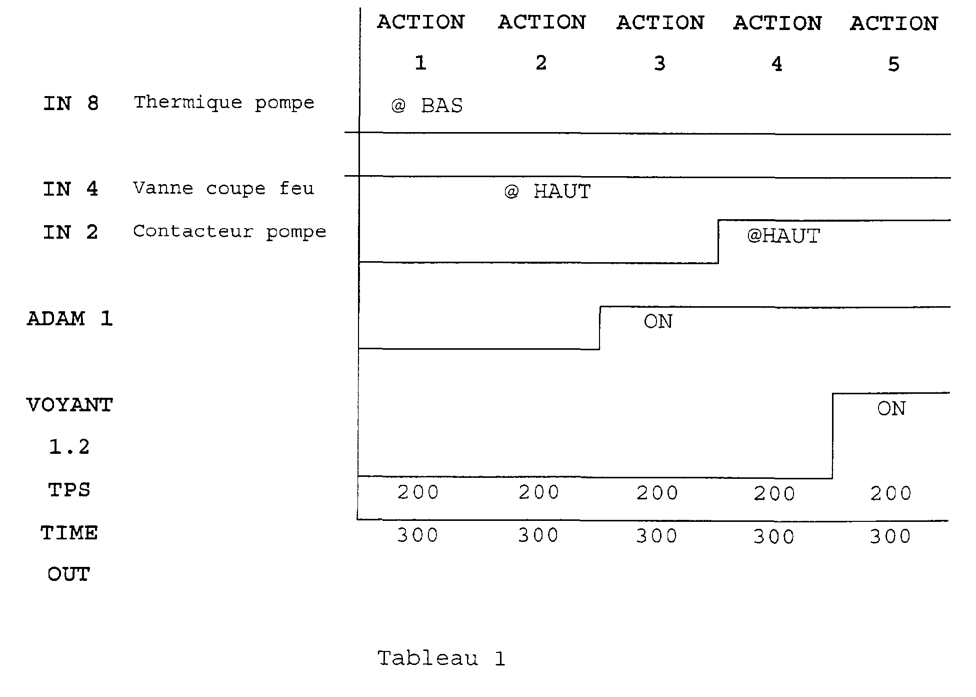

Les câblages des entrées sont les suivants :
- le contact d'un disjoncteur thermique de la pompe à carburant est câblé sur l'entrée digitale 8;
- la vanne coupe-feu est câblé sur l'entrée digitale 4;
- le contacteur de la pompe à carburant est câblé sur l'entrée digitale 2.

L'état de l'entrée digitale 8 est attendu à un niveau "Bas" parce qu'avant la pression du bouton 12.1 ce contact devrait déjà être en position "Bas". La vanne coupe-feu devrait aussi être positionnée ouverte donc l'état attendu est "Haut" sur l'entrée 4 avant que le bouton 12.1 ne soit actionné. La pression sur le bouton 12.1 peut dès lors actionner le contact 1 du module déporté 1 ("ADAM 1"), ce qui aura pour effet d'actionner le contacteur de la pompe à carburant. Si celui-ci est actionné, il renvoie un état "Haut" sur l'entrée 2 qui devra positionner le voyant de la pompe sur "ON".

## Revendications

1. Installation d'essais (1) destinée à la réalisation de tests sur des moteurs (100), de préférence des moteurs d'avions tels que turboréacteurs ou turbopropulseurs qui sont disposés dans un banc d'essais (7) et qui sont en interaction avec des actionneurs (9) et des capteurs (11) constituant respectivement les sorties et les entrées d'un organe de commande et de contrôle (5) qui est lui-même associé à des moyens permettant l'établissement, le contrôle et la visualisation du point de fonctionnement dudit banc d'essais et dudit moteur en temps réel, **caractérisée en ce que** lesdits moyens pour l'établissement, le contrôle et la visualisation comprennent au moins une interface opérateur (3), de préférence à écran tactile, munie d'une pluralité de boutons-poussoirs (31) programmables, chacun desdits boutons-poussoirs (31) étant programmé de sorte que l'action de presser ledit bouton-poussoir (31) déclenche l'exécution d'une action ou séquence d'actions prédéfinie sur ledit moteur en fonctionnement et/ou ledit banc d'essais.

2. Installation selon la revendication 1, **caractérisée en ce que** l'interface opérateur (3) comprend plusieurs pages de boutons-poussoirs (31).

3. Installation selon la revendication 1 ou 2, **caractérisée en ce qu'**une pluralité de boutons-poussoirs (31) programmables appartenant à une même page n'est pas visible sur ledit écran tactile.

4. Installation selon la revendication 1, 2 ou 3, **caractérisée en ce que** ladite action ou séquence d'actions comprend l'activation d'au moins une autre action ou séquence d'actions associée à un autre bouton-poussoir.

5. Installation selon l'une quelconque des revendications précédentes, **caractérisée en ce que**, pour chaque bouton-poussoir (31) visible est associé un champ additionnel sous la forme d'un voyant (35), ledit voyant décrivant l'état correspondant audit bouton-poussoir.

6. Installation selon l'une quelconque des revendications précédentes, **caractérisée en ce que** lesdits boutons-poussoirs (31) peuvent aussi bien être activés sur l'écran tactile ou par l'intermédiaire d'une souris d'ordinateur.

7. Installation selon l'une quelconque des revendications précédentes, **caractérisée en ce qu'**elle comporte des moyens pour envoyer un message codé sous forme ASCII par une ligne de communication série à ladite unité centrale de contrôle, par pression ou cliquage sur un desdits boutons-poussoirs, ledit message ASCII comprenant au moins l'adresse dudit bouton-poussoir.

8. Installation selon la revendication 7, **caractérisée en ce qu'**elle comporte en outre des moyens, au niveau de l'unité centrale de contrôle, permettant de décoder ledit message ASCII et de lui associer de manière univoque un fichier descriptif des actions et contrôles à réaliser au niveau du banc d'essais ou du moteur.

9. Installation selon l'une quelconque des revendications précédentes, **caractérisée en ce que** l'unité centrale de contrôle est câblée à une pluralité d'entités physiques situées au niveau du banc d'essais et/ou du moteur.

10. Installation selon l'une quelconque des revendications précédentes, **caractérisée en ce qu'**elle comprend en outre au moins un module de commande intelligent déporté près d'un actionneur et commandé par l'intermédiaire d'un bus de terrain.

11. Procédé de programmation et de configuration de l'ensemble interface opérateur (3)/ organe de contrôle et de commande (5) d'une installation (1) selon l'une quelconque des revendications 1 à 10, **caractérisé en ce qu'**il comprend les étapes suivantes :
- choisir un menu relatif à la gestion de l'écran tactile;
- définir un type de moteur;
- choisir au moins une page de boutons-poussoirs sur l'écran tactile;
- définir, pour au moins un desdits boutons-poussoirs de ladite page, à la fois pour l'état "On" et pour l'état "Off" dudit bouton-poussoir, le texte devant apparaître sur ledit bouton-poussoir, la couleur dudit texte, la couleur de l'arrière-plan, le texte apparaissant dans le champ de type voyant définissant ledit état correspondant au bouton-poussoir, la couleur dudit texte et la couleur de l'arrière-plan dudit champ.

12. Procédé de programmation et de configuration de l'organe de commande et contrôle (5) présent dans l'installation selon l'une quelconque des revendications 1 à 10, comprenant les étapes suivantes :
- choisir un menu relatif à la gestion de l'organe de commande et contrôle proprement dit;
- définir un type de moteur;
- choisir au moins une page de voyants sur l'écran tactile;
- définir, pour au moins un desdits voyants de ladite page, à la fois pour l'état "On" et pour l'état "Off" dudit voyant, le texte devant apparaître sur ledit voyant, la couleur dudit texte et la couleur de l'arrière-plan;
- définir de manière univoque l'entité physique associée audit voyant.

13. Procédé de programmation et configuration selon la revendication 12, comprenant en outre les étapes suivantes :
- définir un type de moteur;
- choisir au moins une page de boutons-poussoirs de commande;
- associer de manière univoque au moins un bouton-poussoir à une entité physique du banc d'essais ou du moteur;
- définir de manière univoque, pour ladite entité physique, au moins une action programmée, correspondant à un changement d'état de ladite entité physique.

14. Procédé selon la revendication 13, **caractérisé en ce que** ladite entité physique appartient au groupe constitué par une entrée digitale, une sortie digitale, une entrée analogique, un module intelligent déporté, un bouton-poussoir tactile et un voyant tactile.

15. Procédé selon la revendication 14, **caractérisé en ce que** ladite action ou séquence d'actions comprend la définition d'au moins une action ou séquence d'actions associée à l'activation d'au moins un autre bouton-poussoir.

16. Procédé selon la revendication 14, **caractérisé en ce qu'**un temps mort est défini entre deux actions ou séquences d'actions consécutives dans le temps.

17. Procédé selon la revendication 16, **caractérisé en ce qu'**une durée maximale est définie, durant laquelle une action ou séquence d'actions doit être entièrement réalisée, faute de quoi une action ou séquence d'actions alternative est réalisée, après dépassement de ladite durée maximale.
